(19) Europäisches Patentamt
European Patent Office
Office européen des brevets

(11) **EP 2 516 979 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(51) Int Cl.:
***G01L 7/08*** *(2006.01)*     ***G01L 13/02*** *(2006.01)*
***G01L 19/04*** *(2006.01)*     ***G01L 19/06*** *(2006.01)*

(21) Anmeldenummer: **10778636.0**

(22) Anmeldetag: **11.11.2010**

(86) Internationale Anmeldenummer:
**PCT/EP2010/067251**

(87) Internationale Veröffentlichungsnummer:
**WO 2011/076477 (30.06.2011 Gazette 2011/26)**

(54) **ÜBERLASTSICHERER, DRUCKSENSOR, INSBESONDERE DIFFERENZDRUCKSENSOR**

OVERLOAD-PROOF PRESSURE SENSOR, IN PARTICULAR DIFFERENTIAL PRESSURE SENSOR

CAPTEUR DE PRESSION RÉSISTANT AUX SURCHARGES, EN PARTICULIER CAPTEUR DE PRESSION DIFFÉRENTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2009 DE 102009055149**

(43) Veröffentlichungstag der Anmeldung:
**31.10.2012 Patentblatt 2012/44**

(73) Patentinhaber: **Endress+Hauser GmbH+Co. KG
79689 Maulburg (DE)**

(72) Erfinder:
• **THAM, Anh Tuan
10243 Berlin (DE)**
• **TEIPEN, Rafael
10407 Berlin (DE)**
• **PHILIPPS, Michael
79539 Lörrach (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**US-A- 3 800 413     US-A- 4 086 815
US-A- 4 949 581     US-A- 5 287 283**

**Beschreibung**

Die vorliegende Erfindung betrifft überlastsicheren Drucksensor, Insbesondere einen solchen Differenzdrucksensor. Drucksensoren und insbesondere Differenzdrucksensoren sind gewöhnlich für einen Messbereich spezifiziert, in dem sie einen druckabhängigen Messwert bereitstellen, wobei sie im Idealfall eine mehrfache Überlast des spezifizierten Messbereichs ohne Beschädigung des Sensors überstehen sollen. Dies gilt umso mehr für Differenzdrucksensoren, als dort die statischen Drücke, deren Differenz zu ermitteln ist, den Messbereich der zu ermittelnden Differenz durchaus um einen Faktor von beispielsweise tausend übersteigen können, so dass im Falle einer Fehlbedienung, wenn nur eine Seite der Messmembran eines Differenzdruck mit einem statischen Druck beaufschlagt wird, leicht eine tausendfache Überlast entstehen kann. Hiergegen sind die Messmembranen von Differenzdrucksensoren zu schützen.

Hierzu besteht ein Ansatz in der Bereitstellung von Überlastmembranen, welche zu der Messmembran des Drucksensors in einem hydraulischen Messwerk parallel geschaltet sind, und welche eine größere hydraulische Kapazität aufweisen als die Messmembran des Differenzdrucksensors. Die beiden statischen Drücke, deren Differenz zu ermitteln ist, werden bei solchen Differenzdrucksensoren gewöhnlich über so genannte Prozessmembranen bzw. Trennmembranen, die jeweils über einem Membranbett angeordnet sind, in das Messwerk eingeleitet. Im Falle einer einseitigen Überlast nimmt die Auslenkung der Überlastmembran das Volumen unter der mit der Überlast beaufschlagten Trennmembran auf, bis letztere an ihrem Membranbett zur Anlage kommt, wodurch ein weiterer Druckanstieg an der Messmembran verhindert wird.

Differenzdruckmessgeräte mit einer solchen Überlastmembran werden beispielsweise von der Anmelderin unter der Bezeichnung Deltabar S und Deltabar M hergestellt und in den Verkehr gebracht.

Drucksensoren bzw. Differenzdrucksensoren mit Überlastmembranen sind beispielsweise in US 4,086,815 und US 4,949,581 beschrieben.

US 4,086,815 beschreibt einen Differenzdrucksensor mit einem Sensorkörper, der zwei gegeneinander bewegliche Teilkörper aufweist. Ein innerer Sensorkörper enthält in seinem Innern eine Sensorkammer, die von einer Messmembran in zwei Teilkammern geteilt wird. Der innere Sensorkörper ist von einer Ringmembran in einer Kammer eines äußeren Sensorkörpers gehalten, welcher wiederum Trennmembranen trägt. Im Falle einer einseitigen Überlast wird der gesamte innere Sensorkörper verschoben, um die Messmembran zu entlasten.

US 4,949,581 beschreibt einen Drucksensor mit einer Überlastkammer mit einer Überlastmembran, die zur Messmembran des Sensorelements parallel geschaltet ist. Im Überlastfall wird Übertragungsflüssigkeit von der Überlastmembran aufgenommen, um das Sensorelement zu entlasten.

Ein anderer Ansatz beruht darauf, ein Membranbett für die Messmembran bereitzustellen, an welchem die Messmembran im Falle einer einseitigen Überlast zur Anlage kommt, wodurch die Messmembran abgestützt wird und von einer Beschädigung geschützt ist.

Beide Ansätze weisen ihre spezifische Schwächen auf, denn eine Überlastmembran führt in der Regel zu einem größeren hydraulischen Volumen was bei einem gegebenen Druck zu größeren Kräften und damit zu einer aufwendigeren mechanischen Konstruktion führt.

Eine Abstützung der Messmembran an einem Membranbett, welches beispielsweise eine Kontur aufweist, die der Biegelinie der Messmembran entspricht, ist beispielsweise mit den gängigen kapazitiven Messwandlern nur bedingt kompatibel, da diese gewöhnlich gegenüber einer vollflächigen Elektrode an der Messmembran eine ringförmige Referenzelektrode aufweist, welche eine kreisförmige Messelektrode umgibt, wobei die Messelektrode und die Referenzelektrode in der hohe Lage der Messmembran die gleiche Kapazität gegenüber der Elektrode der Messmembran aufweisen.

Hierbei weisen die Messelektrode und die Referenzelektrode insbesondere gleichen Abstand zur Messmembran auf. Insoweit ändert sich die Referenzkapazität zwischen der Referenzelektrode und der Elektrode der Messmembran erheblich geringer als die druckabhängige Kapazität zwischen der Messelektrode und der Elektrode der Messmembran, wenn die Messmembran druckabhängig ausgelenkt wird. Diese Annahme gilt nicht mehr, wenn die ringförmige Referenzelektrode und die Messelektrode auf einem Membranbett angeordnet sind, welches eine Kontur aufweist, die durch die Biegelinie der Messmembran vorgegeben ist.

Zudem besteht die Gefahr, dass eine am Membranbett abgestützte Messmembran nach Wegfallen der Überlast am Membranbett haften bleibt.

Es ist daher die Aufgabe der vorliegenden Erfindung, einen überlastfesten Drucksensor bereitzustellen, welcher die Nachteile des Standes der Technik überwindet.

Der erfindungsgemäße Drucksensor umfasst einen Sensorkörper mit einer Sensorkammer im Inneren, mindestens eine erste Trennmembran, welche unter Bildung einer ersten Trennmembrankammer, mit dem Sensorkörper verbunden ist; eine Messmembran, welche die Sensorkammer in zwei Teilkammern unterteilt; eine Übertragungsflüssigkeit, mit welcher die erste Trennmembrankammer, die erste Teilkammer und ein Kanal dazwischen gefüllt sind, um einen Druck auf die Messmembran zu übertragen; wobei der Drucksensor für einen Temperaturbereich zwischen einer Minimaltemperatur und einer Maximaltemperatur sowie für einen Druckbereich spezifiziert ist, wobei bei der Minimaltemperatur das Übertragungsflüssigkeitsvolumen in der ersten Teilkammer, dem ersten Kanal und der ersten Trennmembrankammer ausreicht, um über den gesamten Druckbereich den Druck auf die Messmembran zu übertragen, ohne dass die erste Trennmembran zur Anlage kommt, und wobei, wenn im Überlastfall bei Maximaltemperatur das gesamte Ölvolumen aus der ersten Trennmembrankammer in die erste Teilkammer gelangt und durch Auslenken der Messmembran aufgenommen wird, die Messmembran keine plastische Verformung erfährt.

Der erfindungsgemäße Drucksensor umfasst in einer Weiterbildung

einen Sensorkörper mit

mindestens einem ersten Oberflächenabschnitt,

der über einen ersten Kanal mit einer Sensorkammer im Inneren des Sensorkörpers kommuniziert;

mindestens eine erste Trennmembran, welche den ersten Oberflächenabschnitt überdeckt und unter Bildung einer ersten Trennmembrankammer entlang eines umlaufenden Randes druckdicht mit dem Sensorkörper verbunden ist;

eine Messmembran, welche die Sensorkammer in eine erste Teilkammer und in eine zweite Teilkammer unterteilt;

eine Übertragungsflüssigkeit, mit welcher die erste Trennmembrankammer, der erste Kanal und die erste Teilkammer gefüllt sind, um den an der ersten Trennmembran anliegenden Druck über den ersten Kanal und die erste Teilkammer auf eine erste Seite der Messmembran zu übertragen; und

einen Wandler zum Erzeugen eines von der Verformung der Messmembran abhängigen elektrischen Signals wobei die Verformung der Messmembran ein Maß für die Differenz zwischen einem ersten Druck in der ersten Teilkammer und einem zweiten Druck in der zweiten Teilkammer ist;

wobei der Drucksensor für einen Temperaturbereich zwischen einer minimalen Temperatur und einer maximalen Temperatur spezifiziert ist und wobei der Drucksensor für einen Druckbereich spezifiziert ist, wobei bei der minimalen Betriebstemperatur die Übertragungsflüssigkeit in der ersten Teilkammer, dem ersten Kanal und der ersten Trennmembrankammer noch ein solches Volumen aufweist, dass über den gesamten spezifizierten Druckbereich der erste Druck in die erste Teilkammer eingeleitet werden kann, ohne dass die erste Trennmembran zur Anlage kommt, und dass bei der maximalen Temperatur im Falle einer Überlast die erste Trennmembran gegen den ersten Oberflächenabschnitt des Sensorkörpers gedrückt wird, so dass das gesamte Ölvolumen aus der Trennmembrankammer in die erste Teilkammer gelangt und durch Auslenken der Messmembran aufgenommen wird, wobei die Messmembran keine plastische Verformung erfährt.

Gemäß einer Weiterbildung der Erfindung gilt:

$$V_{\max} \leq \frac{R^4}{h} \cdot \frac{\pi}{12} \cdot (1 - \upsilon^2) \cdot \frac{1}{S} \frac{\sigma_{\max}}{E} \qquad (1),$$

mit dem Sicherheitsfaktor $S \geq 1$, wobei $V_{max}$ das maximale Volumen der Übertragungsflüssigkeit in der Trennmembrankammer in der Ruhelage des Drucksensors ist, wobei $R$ und $h$ der Radius und Stärke der Messmembran sind, wobei $v$ die Poissonzahl des Materials der Messmembran ist, wobei $\sigma_{max}$ die maximal zulässige Spannung des Materials der Messmembran ist, und wobei E der Elastizitätsmodul des Materials der Messmembran ist. $V_{max}$ kann insbesondere $V(T_{max})$ sein, wobei $T_{max}$ die spezifizierte Maximaltemperatur ist. Die maximal zulässige Spannung $\sigma_{max}$ können beispielsweise die Streckgrenze eines metallischen Werkstoffs oder die Bruchspannung eines Halbleiters oder einer Keramik sein.

In einer Weiterbildung beträgt S beispielsweise nicht weniger als 1,25 insbesondere nicht weniger als 1.5.

In einer Weiterbildung der Erfindung gilt:

$$V_{\min} \geq \frac{R^6}{h^3} \cdot \frac{\pi \cdot (1 - \upsilon^2)}{16 \cdot E} \cdot p_{\max} \qquad (2),$$

wobei $V_{min}$ das minimale Volumen der Übertragungsflüssigkeit in der Trennmembrankammer in der Ruhelage des Drucksensors ist, und wobei $\rho_{max}$ die Obergrenze des spezifizierten Messbereichs ist. $V_{min}$ kann insbesondere $V(T_{min})$ sein, wobei $T_{min}$ die spezifizierte Minimeltemperalur ist

In einer Weiterbildung der Erfindung beträgt die Differenz zwischen der spezifizierten Maximaltemperatur und der spezifizierten Minimaltemperatur nicht weniger als 125 K, vorzugsweise nicht weniger als 165 K, weiter bevorzugt nicht weniger als 200 K und besonders bevorzugt nicht weniger als 220 K.

Erfindungsgemäß umfasst die Messmembran eine in der Ruhelage im wesentlichen ebene Kreisscheibe.

Gemäß einer Weiterbildung der Erfindung ist der Drucksensor so dimensioniert, dass bei der Obergrenze des spezifizierten Messbereichs $\rho_{max}$ die maximale Spannung in der Messmembran nicht weniger als 20 % der maximal zulässigen Spannung $\sigma_{max}$, insbesondere nicht weniger als 30% von $\sigma_{max}$, vorzugsweise nicht weniger als 35% von $\sigma_{max}$ beträgt. In einer Ausgestaltung dieser Weiterbildung der Erfindung kann die maximale Spannung in der Messmembran bei der Obergrenze des spezifizierten Messbereichs $\rho_{max}$ beispielsweise nicht mehr als 60% und insbesondere nicht mehr als 50 % von $\sigma_{max}$ betragen.

Gemäß einer Weiterbildung der Erfindung ist ein kapazitiver Drucksensor insbesondere so dimensioniert, dass bei der Obergrenze des spezifizierten Messbereichs $\rho_{max}$ dass der Betrag der Auslenkung der Messmembran in ihrem Zentrum nicht weniger als 20%, insbesondere nicht weniger als 25%, und bevorzugt nicht weniger als 30% des Gleichgewichtsabstands der Messmembran zu einer Gegenelektrode beträgt eines kapazitiven Wandlers beträgt

In einer Weiterbildung umfasst die Messmembran ein erstes Material und der Sensorkörper zumindest in dem Bereich, an dem die Messmembran befestigt ist, ein zweites Material, wobei der Wärmeausdehnungskoeffizient $\alpha_1$ des ersten Materials nicht mehr als 10 % vorzugsweise nicht mehr als 5 % und besonders bevorzug nicht mehr als 2,5 % vom Wärmeausdehnungskoeffizienten $\alpha_2$ des zweiten Materials abweicht, also $|(\alpha_1 - \alpha_2)/\alpha_2| \leq 10\%$, vorzugsweise $|(\alpha_1 - \alpha_2)| \leq 5\%$ und besonders bevorzugt $|(\alpha_1 - \alpha_2)/\alpha_2| \leq 2,5\%$.

In einer derzeit bevorzugten Ausgestaltung der Erfindung weisen die Messmembran und der Sensorkörper Stahl auf, insbesondere Edelstahl oder Federstahl.

In einer anderen Ausgestaltung der Erfindung umfassen die Messmembran und/oder der Sensorkörper einen elektrisch isolierenden Werkstoff, insbesondere einen keramischen Werkstoff.

In einer Weiterbildung der Erfindung umfasst die Messmembran mindestens eine Elektrode des kapazitiven Wandlers, wobei der Wandler weiterhin mindestens eine Gegenelektrode aufweist, die im wesentlichen druckunabhängig bezüglich des Sensorkörpers gegenüber der Messmembran positioniert ist. Die mindestens eine Gegenelektrode kann insbesondere in der ersten Teilkammer auf einem Elektrodenträger angeordnet sein.

Der Elektrodenträger kann beispielsweise den gleichen Werkstoff aufweisen, wie das Gehäuse, wobei die Gegenelektrode und vorzugsweise auch der Elektrodenträger gegenüber der Messelektrode elektrisch isoliert ist. In einer Weiterbildung der Erfindung ist die Gegenelektrode in der Weise beabstandet zu leitfähigen Flächen angeordnet, dass die Kapazitäten zwischen der Elektrode der Messmembran und der mindestens einen Gegenelektrode nicht weniger als die Streukapazität zwischen den Elektroden des kapazitiven Wandlers und dem Sensorkörper beträgt. Insbesondere im Falle eines Sensorkörpers, der einen metallischen Werkstoff aufweist, bedeutet dies, dass ein hinreichender Abstand zwischen der Gegenelektrode und der Wand der Teilkammer vorzusehen ist. Dies bedeutet eine Erhöhung des Volumens der Teilkammer, insbesondere für diesen Fall enthält die Teilkammer in einer Weiterbildung der Erfindung zumindest einen Füllkörper, der insbesondere zwischen einer Wand der Teilkammer und der der Messmembran abgewandten Seite der Gegenelektrode angeordnet ist.

Der Sinn und Zweck eines Füllkörpers ergibt sich insbesondere aus den folgenden Erwägungen:

Das Verhältnis zwischen dem maximalen und dem minimalen Volumen der Übertragungsflüssigkeit ergibt sich als

$$\frac{V_{max}}{V_{min}} \leq (1+\beta) \cdot (1+\gamma_3 \cdot \Delta T) - \beta \qquad (3),$$

wobei $\beta$ das Verhältnis des Volumens der Teilkammer zum Volumen der Übertragungsflüssigkeit in der Trennmembrankammer bei Referenztemperatur ist, wobei die Referenztemperatur insbesondere Minimaltemperatur sein kann. Durch einen Vergleich von (3) mit dem Quotienten aus (2) und (1) folgt:

$$\beta \leq \frac{\left(\frac{h}{R}\right)^2 \cdot \frac{1}{S} \cdot \frac{4}{3} \cdot \frac{\sigma_{max}}{p_{max}} - 1}{\gamma_3 \cdot \Delta T} - 1 \qquad (4).$$

Betrachtet man beispielsweise eine Messmembran mit einer Membranstärke h von 400 $\mu$m und einem Radius von 2 cm, so folgt bei einer Streckgrenze von 200 MPa, einem Wert von 20 kPa für pmax, einem Temperaturbereich von 200 K bei $\gamma_3$ = 0,001/K und S = 1: $\beta \leq 20,7$. Berücksichtigt man weiterhin, dass der Volumenhub einer Messmembran nur etwa ein Drittel des Volumens eines Zylinders mit der Grundfläche der Messmembran und einer Höhe, die dem axialen Hub der Messmembran entspricht, aufweist, so stehen nur knapp sieben solcher Zylindervolumen für die Teilkammer des Sensors zur Verfügung.

Bei Differenzdrucksensoren ist etwas mehr als ein Zylindervolumen zwischen der Messmembran und der Gegenelektrode bereitzuhalten, um die Auslenkung der Messmembran aufzunehmen. Die verbleibenden knapp sechs Zylindervolumen stehen für den Abstand zwischen Gegenelektrode zur Verringerung von Streukapazitäten und zur Führung von Kanälen durch den Trägerkörper der Gegenelektrode und den Trennmembranträgerkörper zur Verfügung. Dazu können die sechs Zylindervolumen ggf. ausreichen.

Eine Vergrößerung des Temperatureinsatzbereichs $\Delta T$ und/oder eine Vergrößerung des Messbereichs durch Erhöhung der Obergrenze des Messbereichs pmax können beispielsweise mit einem Füllkörper erreicht werden, der das freie Volumen der Teilkammer reduziert.

Die obige Erwägung für Differenzdrucksensoren, wonach der dreifache Volumenhub der Messmembran für den zylindrischen Bewegungsraum der Messmembran auf die Gegenelektrode zu benötigt wird, ist für Absolutdruck- oder Relativdrucksensoren nicht gültig. Für diesen Sensortyp ist es ausreichend, wenn in der Ruhelage der Messmembran ein Bruchteil eines Volumenhubs zwischen der Messmembran und der Gegenelektrode vorhanden ist, um die Messmembran gleichmäßig mit Druck beaufschlagen zu können. Diese Annäherung der Messmembran an die Gegenelektrode verringert nicht nur die Menge der Übertragungsflüssigkeit, sondern sie erhöht zugleich die Dynamik des Messsignals.

In einer Weiterbildung der Erfindung weist der Füllkörper mit dem Volumen $V_1$ bei einer Referenztemperatur einen ersten Werkstoff mit einem ersten Volumenausdehnungskoeffizienten $\gamma_1$ auf, und der Gehäusekörper weist einen zweiten Werkstoff mit einem zweiten Volumenausdehnungskoeffizienten $\gamma_2$, wobei gilt: $\gamma_1 < \gamma_2$. Durch geeignete Dimensionierung weist das freie Volumen $V_2 - V_1$ der Teilkammer, welches der Übertragungsflüssigkeit zur Verfügung steht, eine größere Temperaturabhängigkeit auf, als sie durch $\gamma_1$ oder $\gamma_2$ alleine erreicht werden. Damit kann das veränderliche freie Volumen $V_2 - V1$ der Teilkammer zumindest anteilig die temperaturabhängigen Volumenschwankungen der Übertragungsflüssigkeit ausgleichen. Ein vollständiger Ausgleich der Volumenschwankungen der Übertragungsflüssigkeit lässt sich nach den folgenden Erwägungen erzielen. Sei $V_3$ das Gesamtvolumen der Übertragungsflüssigkeit in der Teilkammer und in der Trennmembrankammer bei einer Referenztemperatur, sei $\gamma_3$ der Volumenausdehnungskoeffizient der Übertragungsflüssigkeit, und sei das freie Volumen der Teilkammer $V_2 - V_1$. Wenn dann gilt:

$$V_3 = (1 + x)(V_2 - V_1) \qquad (5),$$

und

$$V_1 = V2 * [(1 + x)\,\gamma_3 - \gamma_2] \,/\, [(1 + x)\,\gamma_3 - \gamma_1] \qquad (6),$$

so werden sämtliche temperaturbedingte Volumenschwankungen der Übertragungsflüssigkeit in dem veränderlichen freien Volumen zwischen Teilkammer und Füllkörper aufgenommen. Die Zahl x kann theoretisch beliebige positive Werte annehmen, wobei beispielsweise gilt: $0 < x < 10$, insbesondere $x < 5$, vorzugsweise $x < 2$. In diesem Fall würde es praktisch keinerlei durch die Wärmeausdehnung der Übertragungsflüssigkeit bedingten Einschränkungen des Temperaturbereichs geben, für den der Drucksensor spezifiziert ist.

Insoweit, als in der Praxis ohnehin weitere Randbedingungen den Temperatureinatzbereich beschränken, ist eine vollständige Unabhängigkeit von der Volumenausdehnung der Übertragungsflüssigkeit nicht zwingend erforderlich oder vorteilhaft. Es ist aber durchaus sinnvoll, wenn die Temperaturabhängigkeit durch den Einsatz eines Füllkörpers reduziert wird. So kann gemäß einer Weiterbildung der Erfindung beispielsweise jeweils mindestens 25%, bevorzugt mindestens 50%, der Wärmeausdehnung der Übertragungsflüssigkeit durch die Zunahme des freien Volumens $V_2 - V_1$ in den Teilkammern aufgenommen werden.

Abgesehen davon, dass mit dem beschriebenen Ansatz der Messbereich der Drucksensoren vergrößert werden kann, führt ein reduzierter Volumenhub der Übertragungsflüssigkeit zu geringeren Trennmembranfehlern.

Sofern der (Differenz-)Drucksensor einen Füllkörper aufweist, der im wesentlichen einen elektrischen Isolator umfasst, so kann der Füllkörper zugleich den Elektrodenträger für die mindestens eine Gegenelektrode umfassen. In diesem Falle ist es derzeit bevorzugt, dass der Füllkörper in einem messmembranseitigen Endabschnitt mit dem Sensorkörper verbunden ist, um die axiale Position der mindestens einen Gegenelektrode bezüglich der Messmembran zu definieren.

Die Messmembran selbst kann auf dem Potential des Sensorkörpers liegen, oder gegenüber diesem elektrisch isoliert sein. Zur isolierten Anordnung kann die Messmembran beispielsweise an einem ringförmigen Träger aus einem Isolationswerkstoff oder zwischen zwei solchen Trägern eingespannt sein.

Bei der Ausgestaltung des erfindungsgemäßen Drucksensors als Differenzdrucksensor umfasst der Sensorkörper weiterhin einen zweiten Oberflächenabschnitt der über einen zweiten Kanal mit der zweiten Teilkammer im Inneren des Sensorkörpers kommuniziert; wobei der Differenzdrucksensor weiterhin umfasst:

eine zweite Trennmembran, die den zweiten Oberflächenabschnitt überdeckt und unter Bildung einer zweiten Trennmembrankammer entlang mindestens eines umlaufenden Randes druckdicht mit dem Sensorköper verbunden ist;

wobei weiterhin die zweite Trennmembrankammer, der zweite Kanal und die zweite Teilkammer gefüllt sind mit der Übertragungsflüssigkeit, um den an der zweiten Trennmembran anliegenden Druck über den zweiten Kanal und die zweite Teilkammer auf die zweite Seite der Messmembran zu übertragen; wobei der Differenzdrucksensor für einen Temperaturbereich zwischen einer minimalen Temperatur und einer maximalen Temperatur spezifiziert ist und wobei der Drucksensor für einen Differenzdruckbereich spezifiziert ist, wobei bei der minimalen Betriebstemperatur die Übertragungsflüssigkeit in den Teilkammern noch ein solches Volumen aufweist, dass über den gesamten spezifizierten Differenzdruckbereich der erste Druck und der zweite Druck in die erste und zweite Teilkammer eingeleitet werden können, ohne dass eine der Trennmembranen zur Anlage kommt, und dass bei der maximal Temperatur im Falle einer einseitigen Überlast die Trennmembran von der Seite mit dem höheren Druck gegen den Oberflächenabschnitt des Sensorkörpers gedrückt wird, so dass das gesamte Ölvolumen aus der Trennmembrankammer in die entsprechende Teilkammer gelangt und durch Auslenken der Messmembran aufgenommen wird, wobei die Messmembran keine plastische Verformung erfährt.

Die Erfindung wird nun anhand der in den Zeichnungen dargestellten Ausführungsbeispiele näher erläutert. Es zeigt:

Fig. 1: einen Längsschnitt durch ein erstes Ausführungsbeispiel eines erfindungsgemäßen Differenzdrucksensors;

Fig. 2: einen Längsschnitt durch ein Ausführungsbeispiel eines erfindungsgemäßen Absolutdrucksensors; und

Fig. 3: einen Längsschnitt durch ein zweites Ausführungsbeispiel eines erfindungsgemäßen Differenzdrucksensors.

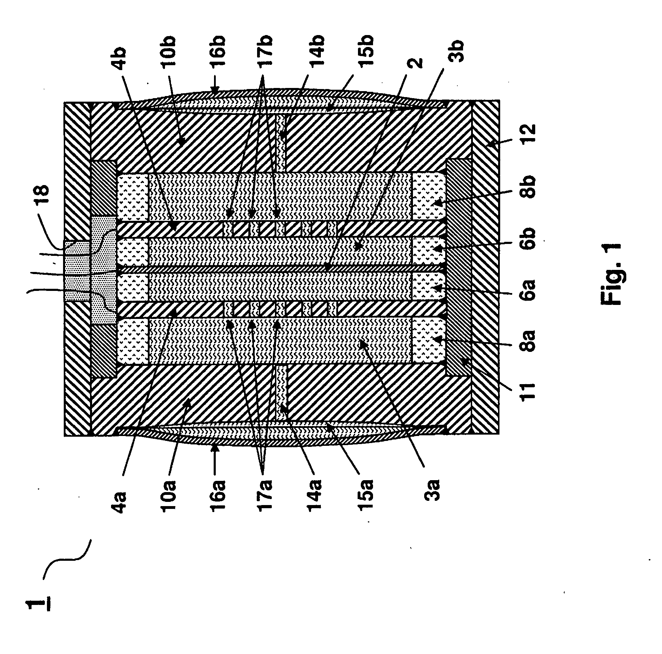

Der in Figur 1 dargestellte Differenzdrucksensor 1 umfasst eine Messmembran 2, welche einen Innenraum eines Sensorkörpers in eine erste Teilkammer 3a und eine zweite Teilkammer 3b aufteilt. In der ersten Teilkammer 3a und in der zweiten Teilkammer 3b ist jeweils ein Elektrodenträger 4a, 4b angeordnet, wobei zum Bereitstellen eines druckabhängigen Messsignals die Kapazitäten zwischen einer Elektroden auf der Messmembran 2 und einer ersten Gegenelektrode auf einem ersten der Elektrodenträger 4a einerseits sowie einer Elektrode auf der Messmembran 2 und einer zweiten Gegenelektrode auf dem zweiten der Elektrodenträger 4b andererseits ausgewertet werden. Die Messmembran 2 und die beiden Elektrodenträger 4a, 4b sind beispielsweise aus Stahl gefertigt und gegeneinander durch einen ersten ringförmigen Isolationskörper 6a und einen zweiten ringförmigen Isolationskörper 6b elektrisch isoliert, wobei die Isolationskörper insbesondere ein keramischen Werkstoff aufweisen können. Auf den der Messmembran abgewandten Außenseiten der Elektronenträger 4a, 4b ist jeweils ein ringförmiger Abstandhalter 8a, 8b angeordnet, welcher vorzugsweise den gleichen Werkstoff aufweist wie die Isolatorkörper 6a, 6b. Die Abstandhalter 8a, 8b, die Elektrodenträger 4a, 4b, die Isolationskörper 6a, 6b und die Messmembran 2 sind miteinander beispielsweise durch Hartlöten entlang des Umfangs der jeweiligen Berührungsflächen zu einem Stapel verbunden, wobei dieser Stapel zwischen einem ersten Trennmembranträgerkörper 10a und einem zweiten Trennmembranträgerkörper 10b angeordnet ist, wobei die beiden Trennmembranträgerkörper wiederum entlang des Umfangs ihrer jeweiligen Verbindungsflächen mit einem der Abstandskörper gefügt sind. Der Stapel zwischen den Membranträgerkörpern weist einen geringeren Umfang auf, als der maximale Umfang der Membranträgerkörper, wodurch Raum bleibt, um den Stapel ein Isolationsmaterial 11 anzuordnen, ohne den maximalen Umfang der Membranträgerkörper 10a, 10b zu überschreiten. Die so beschriebene Anordnung ist in einer Hülse 12 positioniert, die an ihren beiden Stirnseiten jeweils durch Schweißen entlang der umlaufenden Verbindungslinie zwischen den Membranträgerkörpern und der Hülse 12 befestigt ist. Durch den ersten und zweiten Membranträgerkörper 10a, 10b erstreckt sich jeweils eine erster bzw. zweiter Kanal 14a, 14b in die erste bzw. zweite Teilkammer 3a, 3b. Die Stirnflächen des ersten und zweiten Membranträgerkörpers 10a, 10b weisen jeweils ein Membranbett auf, über dem eine Trennmembran 16a, 16b angeordnet ist, wobei die Trennmembranen unter Bildung einer ersten Druckkammer 15a und einer zweiten Druckkammer 15b zwischen den Trennmembranen und dem Membranbett entlang ihres Umfangs druckdicht mit den Membranträgerkörpern verschweißt sind. Die beiden Trennmembrankammern 15a, 15b und die beiden Teilkammern 3a, 3b einschließlich der Kanäle 14a, 14b sind jeweils mit einer Übertragungsflüssigkeit gefüllt, um die Messmembran 2 von der an der ersten Teilkammer 3a mit einem ersten Druck der an der ersten Trennmembran 16a ansteht, und von der Seite der zweiten Teilkammer 3b mit einem zweiten Druck, der an der zweiten Trennmembran 16b ansteht, zu beaufschlagen. Der erste und der zweite Elektrodenträger 4a, 4b weisen Durchbrüche 17a, 17b auf, durch welche die Übertragung zur Messmembran erfolgt.

Die Messmembran weist beispielsweise eine im wesentlichen ebene Stahlscheibe mit beispielsweise einer Stärke von 400 Mikrometern und einen auslenkbaren Durchmesser von vier Zentimetern auf. Geht man von einer Messmembran aus Stahl mit einem E-Modul von 200 Gigapascal und einer Streckgrenze von 200 Megapascal, so kann die Messmembran vor dem erreichen der Streckgrenze, einen Volumenhub von knapp 90 Mikrolitern aufnehmen. Die Auslenkung der Messmembran im Zentrum beträgt dabei gut 200 Mikrometer. Dem entsprechend weisen beispielsweise die Isolatorkörper 6a und 6b eine Stärke von etwa 220 Mikrometer auf, um einen hinreichenden Abstand zwischen der Messmembran und den Elektrodenträgern zu gewährleisten. Die Füllmenge der Übertragungsflüssigkeit ist so bemessen, dass bei der maximal spezifizierten Betriebstemperatur in der Ruhelage der Messmembran sich nicht mehr als 90 Mikroliter Übertragungsflüssigkeit in den Trennmembrankammern befinden. Die Abstandhalter 8a und 8b können beispielsweise eine Stärke von 1,3 Millimetern aufweisen. Der Durchmesser der Kanäle 14a und 14b sowie der Durchbrüche 17a und 17b ist entsprechend gering auszulegen, sodass sie einen vernachlässigbaren Beitrag zum Gesamtvolumen der Teilkammern leisten. Mit dieser Anordnung ist selbst bei einer Abkühlung des Differenzdrucksensors 200 Grad Celsius gegenüber der maximalen Temperatur noch eine solche Menge an Übertragungsflüssigkeit in den Trennmembrankammern enthalten, dass ein Differenzdruck von beispielsweise 200 Millibar zur Messmembran übertragen werden kann, bevor die Trennmembran auf der Seite des höheren Drucks zur Anlage kommt. Zur Verringerung des freien Volumens können in den Teilkammern auf der von der Messmembran abgewandten Seite der Elektrodenträger hier nicht dargestellte Füllkörper eingebracht sein, insbesondere keramische Füllkörper.

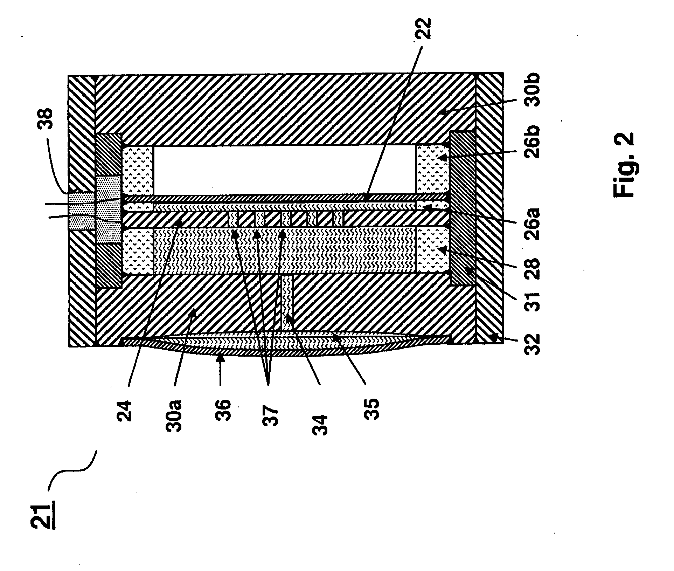

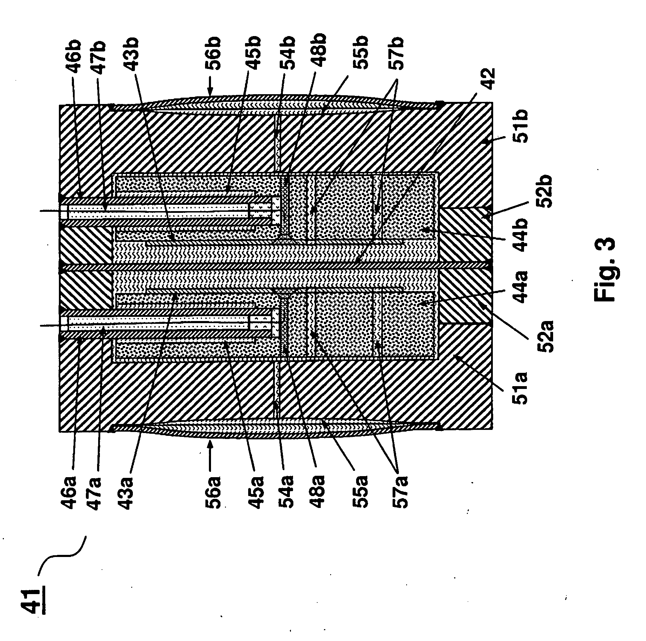

Figur 2 zeigt einen erfindungsgemäßen Absolutdrucksensor 21, dessen Messmembran 22 einen Innenraum des Sensorkörpers in eine erste Teilkammer und eine zweite Teilkammer unterteilt, wobei die erste Teilkammer mit einer Übertragungsflüssigkeit gefüllt ist und die zweite Teilkammer evakuiert ist. In der ersten Teilkammer ist der Messmembran 22 gegenüber ein Elektrodenträger 24 angeordnet, wobei zwischen der Messmembran 22 und dem Elektrodenträger 24 eine ringförmiger Isolationskörper 26a angeordnet ist, welche bevorzugt ein keramischen Werkstoff aufweist. Auf den freien Stirnflächen des Elektrodenträgers 24 und der Messmembran 22 ist jeweils koaxial mit dem Isolationskörper 26a ein erster Abstandhalter 28 bzw. ein zweiter Abstandhalter 26b angeordnet und mit dem Elektrodenträger 24 bzw. der Messmembran 22 durch Hart Löten verbunden, wobei der erste Abstandshalter 28 entlang seines Umfangs mit einem Stirnseitig aufgesetzten Membranträgerkörper 30a gefügt ist. Der Abstandhalter 26b ist entlang seines Umfangs mit einer rückseitigen Stirnplatte 30b druckdicht verbunden. Um den Stapel, welcher die Isolationskörper, den Abstandshalter, den Elektrodenträger und die Messmembran umfasst, ist zwischen dem Trennmembranträgerkörper 30a und der rückseitigen Stirnplatte 30b pro umlaufend ein Isolationsmaterial 31 aufgebracht, bevor diese Anordnung in eine Stahlhülse 32 eingeführt in die durch Schweißen an den Stirnseiten der Anordnung fixiert ist. Der Membranträgerkörper weist wiederum einen Kanal 34 auf, durch welchen die erste Teilkammer mit einem Druck beaufschlagbar ist. An der Stirnseite des Trennmembranträgerkörpers 30a ist ein Membranbett ausgebildet, wobei der an der Stirnseite eine Trennmembran 36 entlang ihres Umfangs unter Bildung einer Trennmembrankammer 35 druckdicht verschweißt ist. Die erste Teilkammer, der Kanal 34 und die Trennmembrankammer 35 ist wiederum mit einer Übertragungsflüssigkeit gefüllt, um die Messmembran 22 mit dem an der Trennmembran anstehenden Druck zu beaufschlagen. Zur Übertragung des Drucks bis zur Trennmembran sind Durchbrüche 37 in dem Elektrodenträger 24 vorgesehen. Durch eine Durchführung 38, werden elektrische Anschlüsse der Elektroden nach außen geführt. Der in Fig. 3 dargestellte Differenzdrucksensor 41 umfasst eine Messmembran 42, welche insbesondere Stahl umfasst und welche einen Innenraum eines Sensorkörpers in zwei Teilkammern unterteilt. Gegenüber der Messmembran ist in den beiden Teilkammern jeweils eine Gegenelektrode 43a, 43b auf einem kreisplattenförmigen keramischen Elektrodenträgerkörper 44a, 44b angeordnet. Die Elektrodenträgerkörper weisen von ihrer Mantelfläche her jeweils mindestens eine radiale Bohrung 45a, 45b mit einem verjüngten Endabschnitt auf, in dem jeweils ein metallisches Trägerrohr 46a, 46b befestigt ist. Durch die Trägerrohre geführt und von diesen jeweils mittels einer endabschnittseitigen Glasdurchführung und Vergussmasse isoliert verläuft jeweils eine elektrische Ableitung 47a, 47b, welche jeweils eine der Gegenelektroden 43a, 43b beispielsweise über einen Lotkontakt 48a, 48b kontaktiert. Die elektrischen Ableitungen 47a, 47b können zumindest in den Trägerrohren 46a, 46b jeweils mit einer hier nicht näher gezeigten, koaxialen, aktiv getriebenen Guard-Elektrode, die auf dem Potential der jeweiligen Gegenelektrode 43a, 43b geführt wird, von dem Potential des Trägerrohrs abgeschirmt sein. Der Sensorkörper umfasst einen ersten und einen zweiten Trennmembranträgerkörper 51a, 51b sowie einen ersten und einen zweiten Ringkörper 52a, 52b, wobei die Messmembran 42 zwischen den beiden Ringkörpern 52a, 52b mittels umlaufender Schweißnähte druckdicht befestigt ist. Die Trägerrohre 46a, 46b sind jeweils zwischen den Stirnflächen eines Trennmembranträgerkörpers 51 a, 51 b und eines Ringkörpers 52a, 52b in Ausnehmungen in den Stirnfläche positioniert und mittels Schweißen befestigt. Durch umlaufende Schweißnähte entlang des Umfangs zwischen jeweils einem Trennmembranträgerkörper 51a, 51b und einem Ringkörper 52a, 52b ist der Innenraum des Differenzdrucksensors 41 zu seiner Mantelfläche hin druckdicht abgeschlossen. Durch die Stirnflächen der Trennmembranträgerkörper 51 a, 51 b, erstreckt sich jeweils ein Kanal 54a, 54b zur Druckeinleitung in die beiden Teilkammern des Drucksensors. Die Stirnflächen der Trennmembranträgerkörper 51a, 51b weisen jeweils ein Membranbett 55a, 55b auf, über welchen jeweils eine Trennmembran 56a, 56b unter Bildung einer Trennmembrankammer zwischen der Trennmembran 56a, 56b und dem Membranbett 55a, 55b mit einer umlaufenden Schweißnaht druckdicht befestigt ist.

Die Trennmembrankammern, die Kanäle 54a, 54b und die Teilkammern sind jeweils mit einer Übertragungsflüssigkeit gefüllt, um den jeweils an einer der Trennmembranen 56a, 56b anstehenden Druck auf eine Seite der Messmembran zu übertragen. Die isostatisch gelagerten Elektrodenträgerkörper 44a, 44b, können weiterhin durchgehende Bohrungen 57a, 57b in axialer Richtung aufweisen, um den Strömungswiderstand der Elektrodenträgerkörper 44a, 44b zu reduzieren.

Die Elektrodenträgerkörper 44a, 44b weisen insbesondere einen keramischen Werkstoff auf, dessen Ausdehnungskoeffizient kleiner ist als der Wärmeausdehnungskoeffizient des Werkstoffs der Ringkörper 52a, 52b und der Trennmembranträgerkörper 51 a, 51 b. Das Volumen der Elektrodenträgerkörper ist so bemessen, dass zumindest 25% vorzugsweise mindestens 50% der Wärmeausdehnung der Übertragungsflüssigkeit durch die Zunahme des freien Volumens in den Teilkammern aufgenommen wird.

**Patentansprüche**

1. Drucksensor (1), umfassend
   einen Sensorkörper mit
   einer Sensorkammer im Inneren,
   mindestens eine erste Trennmembran (16a, 16b), welche unter Bildung einer ersten Trennmembrankammer (15a, 15b), mit dem Sensorkörper verbunden ist;
   eine Messmembran (2), welche die Sensorkammer in zwei Teilkammern (3a,3b) unterteilt, wobei die Messmembran eine in der Ruhelage im wesentlichen ebene Kreisscheibe umfasst;
   eine Übertragungsflüssigkeit, mit welcher die erste Trennmembrankammer (15a, 15b), die erste Teilkammer (3a, 3b) und ein Kanal (14a, 14b) dazwischen gefüllt sind, um einen Druck auf die Messmembran (2) zu übertragen;
   wobei der Drucksensor (1) für einen Temperaturbereich zwischen einer Minimaltemperatur und einer Maximaltemperatur sowie für einen Druckbereich spezifiziert ist,
   wobei bei der Minimaltemperatur das Übertragungsflüssigkeitsvolumen in der ersten Teilkammer, dem ersten Kanal und der ersten Trennmembrankammer ausreicht, um über den gesamten Druckbereich den Druck auf die Messmembran zu übertragen, ohne dass die erste Trennmembran zur Anlage kommt **dadurch gekennzeichnet, dass**, wenn im Überlastfall bei Maximaltemperatur das gesamte Ölvolumen aus der ersten Trennmembrankammer in die erste Teilkammer gelangt und durch Auslenken der Messmembran aufgenommen wird, die Messmembran keine plastische Verformung erfährt.

2. Drucksensor nach Anspruch 1, wobei gilt:

$$V_{\max} \leq \frac{R^4}{h} \cdot \frac{\pi}{12} \cdot (1 - v^2) \cdot \frac{1}{S} \frac{\sigma_{\max}}{E},$$

   wobei $V_{max} = V(T_{max})$, wobei $T_{max}$ die spezifizierte Maximaltemperatur ist mit dem Sicherheitsfaktor $S \geq 1$, wobei $V_{max}$ das maximale Volumen der Übertragungsflüssigkeit in der Trennmembrankammer in der Ruhelage des Drucksensors ist, wobei $R$ und $h$ der Radius und Stärke der Messmembran sind, wobei v die Poissonzahl des Materials der Messmembran ist, wobei $\sigma_{max}$ die maximal zulässige Spannung des Materials der Messmembran ist, und wobei $E$ der Elastizitätsmodul des Materials der Messmembran ist.

3. Drucksensor nach Anspruch 1, oder 2 für den gilt:

$$V_{\min} \geq \frac{R^6}{h^3} \cdot \frac{\pi \cdot (1 - v^2)}{16 \cdot E} \cdot p_{\max} \qquad (2),$$

   wobei $V_{min}$ das minimale Volumen der Übertragungsflüssigkeit in der Trennmembrankammer in der Ruhelage des Drucksensors ist, und wobei $p_{max}$ die Obergrenze des spezifizierten Messbereichs ist,
   wobei $V_{min} = V(T_{min})$, wobei $T_{min}$ die spezifizierte Minimaltemperatur ist

4. Drucksensor nach einem der vorhergehenden Ansprüche, wobei die Differenz zwischen der spezifizierten Maximaltemperatur und der spezifizierten Minimaltemperatur nicht weniger als 125 K, vorzugsweise nicht weniger als 165 K, weiter bevorzugt nicht weniger als 200 K und besonders bevorzugt nicht weniger als 220 K beträgt.

5. Drucksensor nach einem der vorhergehenden Ansprüche, wobei die Messmembran ein erstes Material und der Sensorkörper ein zweites Material, wobei der Wärmeausdehnungskoeffizient $\alpha_1$ des ersten Materials nicht mehr als 10% vorzugsweise nicht mehr als 5%, weiter bevorzugt nicht mehr als 2,5% vom Wärmeausdehnungskoeffizienten $\alpha_2$ des zweiten Materials abweicht.

6. Drucksensor nach einem der vorhergehenden Ansprüche, wobei die Messmembran und der Sensorkörper Stahl aufweisen, insbesondere Edelstahl oder Federstahl, wobei die Messmembran insbesondere auf dem Potential des Sensorkörpers liegt.

7. Drucksensor nach einem der vorhergehenden Ansprüche, wobei die Messmembran mindestens eine Elektrode eines kapazitiven Wandlers, umfasst, wobei der Wandler weiterhin mindestens eine Gegenelektrode aufweist, die im wesentlichen druckunabhängig bezüglich des Sensorkörpers gegenüber der Messmembran positioniert ist.

8. Drucksensor nach Anspruch 6 oder 7, wobei die die Gegenelektrode in der Weise beabstandet zu leitfähigen Flächen angeordnet, dass die Kapazitäten zwischen der Elektrode der Messmembran und der mindestens einen Gegenelektrode nicht weniger als die Streukapazität zwischen den Elektroden des kapazitiven Wandlers und dem Sensorkörper beträgt.

9. Drucksensor nach einem der vorhergehenden Ansprüche, wobei die Teilkammer einen Füllkörper enthält, welcher insbesondere zwischen einer Wand der Teilkammer und der der Messmembran abgewandten Seite der Gegenelektrode angeordnet ist.

10. Drucksensor Anspruch 9, wobei jeweils mindestens 25%, bevorzugt mindestens 50%, einer Wärmeausdehnung der Übertragungsflüssigkeit durch die Zunahme eines freien Volumens $V_2 - V_1$ einer Teilkammer aufgenommen wird, wobei $V_2$ das Volumen der Teilkammer und $V_1$ das Volumen des Füllkörpers ist.

11. Drucksensor nach Anspruch 9 oder 10, wobei der Füllkörper ein Isolator ist und einen Elektrodenträger für die mindestens eine Gegenelektrode umfasst.

12. Drucksensor nach einem der vorhergehenden Ansprüche, wobei bei der Obergrenze des spezifizierten Messbereichs $p_{max}$ die maximale Spannung in der Messmembran nicht weniger als 20 % der maximal zulässigen Spannung $\sigma_{max}$, insbesondere nicht weniger als 30 % von $\sigma_{max}$, vorzugsweise nicht weniger als 35 % von $\sigma_{max}$ beträgt.

13. Drucksensor nach einem der vorhergehenden Ansprüche, wobei bei der Obergrenze des spezifizierten Messbereichs $p_{max}$ die maximale Spannung in der Messmembran nicht mehr als 60 % der maximal zulässigen Spannung $\sigma_{max}$, insbesondere nicht mehr als 50 % von $\sigma_{max}$ beträgt.

14. Drucksensor nach einem der vorhergehenden Ansprüche, wobei bei der Obergrenze des spezifizierten Messbereichs $p_{max}$ der Betrag der Auslenkung der Messmembran in ihrem Zentrum nicht weniger als 20%, insbesondere nicht weniger als 25%, und bevorzugt nicht weniger als 30% des Gleichgewichtsabstands der Messmembran zu einer Gegenelektrode beträgt eines kapazitiven Wandlers beträgt, der aus der Messmembran und der Gegenelektrode gebildet wird.

15. Drucksensor nach einem der vorhergehenden Ansprüche, wobei der Drucksensor ein Differenzdrucksensor ist, wobei der Sensorkörper weiterhin einen zweiten Oberflächenabschnitt umfasst, der über einen zweiten Kanal mit der zweiten Teilkammer im Inneren des Sensorkörpers kommuniziert; wobei der Differenzdrucksensor weiterhin umfasst:

   eine zweite Trennmembran, die den zweiten Oberflächenabschnitt überdeckt und unter Bildung einer zweiten Trennmembrankammer entlang mindestens eines umlaufenden Randes druckdicht mit dem Sensorköper verbunden ist;
   wobei weiterhin die zweite Trennmembrankammer, der zweite Kanal und die zweite Teilkammer gefüllt sind mit der Übertragungsflüssigkeit, um den an der zweiten Trennmembran anliegenden Druck über den zweiten Kanal und die zweite Teilkammer auf die zweite Seite der Messmembran zu übertragen; wobei der Differenzdrucksensor für einen Temperaturbereich zwischen einer minimalen Temperatur und einer maximalen Temperatur spezifiziert ist und wobei der Drucksensor für einen Differenzdruckbereich spezifiziert ist, wobei bei der minimalen Betriebstemperatur die Übertragungsflüssigkeit in den Teilkammern noch ein solches Volumen aufweist, dass über den gesamten spezifizierten Differenzdruckbereich der erste Druck und der zweite Druck in die erste und zweite Teilkammer eingeleitet werden können, ohne dass eine der Trennmembranen zur Anlage kommt, und dass bei der maximal Temperatur im Falle einer einseitigen Überlast die Trennmembran von der Seite mit dem höheren Druck gegen den Oberflächenabschnitt des Sensorkörpers gedrückt wird, so dass das gesamte Ölvolumen aus der Trennmembrankammer in die entsprechende Teilkammer gelangt und durch Auslenken der Messmembran aufgenommen wird, wobei die Messmembran keine plastische Verformung erfährt.

## Claims

1. Pressure sensor (1), comprising
a sensor body with
a sensor chamber in the interior,
at least a first isolating diaphragm (16a, 16b), which is connected to the sensor body by forming a first isolating diaphragm chamber (15a, 15b);
a measuring diaphragm (2), which divides the sensor chamber into two sub-chambers (3a, 3b), wherein said measuring diaphragm comprises an essentially flat circular disc in the rest position;
a transmission liquid with which the first isolating diaphragm chamber (15a, 15b), the first sub-chamber (3a, 3b) and a channel (14a, 14b) in-between are filled in order to transmit a pressure to the measuring diaphragm (2);
wherein the pressure sensor (1) is specified for a temperature range between a minimum temperature and a maximum temperature and for a pressure range,
wherein at the minimum temperature the volume of the transmission liquid in the first sub-chamber, the first channel and the first isolating diaphragm chamber suffices to transmit the pressure to the measuring diaphragm over the entire pressure range without the first isolating diaphragm coming into a contact position, **characterized in that**
if in the event of overload at the maximum temperature the entire volume of oil from the first isolating diaphragm chamber passes into the first sub-chamber and is absorbed by a deflection of the measuring diaphragm, the measuring diaphragm does not experience any plastic deformation.

2. Pressure sensor as claimed in Claim 1, wherein the following applies:

$$V_{max} \leq \frac{R^4}{h} \cdot \frac{\pi}{12} \cdot (1 - \upsilon^2) \cdot \frac{1}{S} \frac{\sigma_{max}}{E} \qquad (1)$$

where $V_{max} = V(T_{max})$, where $T_{max}$ is the maximum temperature specified with a safety factor $S \geq 1$, where $V_{max}$ is the maximum volume of the transmission liquid in the isolating diaphragm chamber in the rest position of the pressure sensor, where R and h are the radius and strength of the measuring diaphragm, where v is the Poisson ratio of the material of the measuring diaphragm, wherein $\sigma_{max}$ is the maximum permissible stress of the material of the measuring diaphragm and where E is the elasticity module of the material of the measuring diaphragm.

3. Pressure sensor as claimed in Claim 1 or 2, for which the following applies:

$$V_{min} \geq \frac{R^6}{h^3} \cdot \frac{\pi \cdot (1 - \upsilon^2)}{16 \cdot E} \cdot p_{max} \qquad (2),$$

where $V_{min}$ is the minimum volume of transmission liquid in the isolating diaphragm chamber in the rest position of the pressure sensor, and wherein $p_{max}$ is the upper limit of the specified measuring range,
wherein $V_{min} = V(T_{min})$, $T_{min}$ being the specified minimum temperature.

4. Pressure sensor as claimed in one of the previous claims, wherein the difference between the specified maximum temperature and the specified minimum temperature is not less than 125 K, preferably not less than 165 K, more preferably not less than 200 K and particularly preferably not less than 220 K.

5. Pressure sensor as claimed in one of the previous claims, wherein the measuring diaphragm consists of a first material and the sensor body consists of a second material, wherein the thermal expansion coefficient $\alpha_1$ of the first material deviates from the thermal expansion coefficient $\alpha_2$ of the second material by no more than 10%, preferably no more than 5%, and particularly preferably no more than 2.5%.

6. Pressure sensor as claimed in one of the previous claims, wherein the measuring diaphragm and the sensor body have steel, particularly stainless steel or spring steel, wherein the measuring diaphragm is, in particular, at the potential of the sensor body.

7. Pressure sensor as claimed in one of the previous claims, wherein the measuring diaphragm comprises at least an electrode of a capacitance converter, wherein the converter further has at least one counter-electrode which is positioned opposite the measuring diaphragm essentially in a manner that is independent of the pressure in relation to the sensor body.

8. Pressure sensor as claimed in Claim 6 or 7, wherein the counter-electrode is spaced from conductive surfaces such that the capacitances between the electrode and measuring diaphragm and the at least one counter-electrode are not less than the stray capacitance between the electrodes of the capacitance converter and the sensor body.

9. Pressure sensor as claimed in one of the previous claims, wherein the sub-chamber contains a filling body which is arranged in particular between a wall of the sub-chamber and the side of the counter-electrode facing away from the measuring diaphragm.

10. Pressure sensor as claimed in Claim 9, wherein at least 25 %, preferably at least 50 % of a thermal expansion of the transmission liquid is absorbed by the increase in a free volume $V_2 - V_1$ of a sub-chamber, $V_2$ being the volume of the sub-chamber and $V_1$ being the volume of the filling body.

11. Pressure sensor as claimed in Claim 9 or 10, wherein the filling body is an isolator and comprises an electrode carrier for the at least one counter-electrode.

12. Pressure sensor as claimed in one of the previous claims, wherein, in the case of the upper limit of the specified measuring range $p_{max}$, the maximum stress in the measuring diaphragm is not less than 20% of the maximum permissible stress $\sigma_{max}$, particularly not less than 30% of $\sigma_{max}$, preferably not less than 35% of $\sigma_{max}$.

13. Pressure sensor as claimed in one of the previous claims, wherein, in the case of the upper limit of the specified measuring range $p_{max}$, the maximum stress in the measuring diaphragm is not more than 60% of the maximum permissible stress $\sigma_{max}$, particularly not more than 50% of $\sigma_{max}$.

14. Pressure sensor as claimed in one of the previous claims, wherein, in the case of the upper limit of the specified measuring range $p_{max}$, the deflection of the measuring diaphragm in its centre is not less than 20 %, particularly not less than 25 %, and preferably not less than 30% of the equilibrium distance of the measuring diaphragm from a counter-electrode of a capacitance converter which is formed by the measuring diaphragm and the counter-electrode.

15. Pressure sensor as claimed in one of the previous claims, wherein the pressure sensor is a differential pressure sensor, wherein the sensor body further comprises a second surface section that communicates with the second sub-chamber inside the sensor body via a second channel, wherein the differential pressure sensor further comprises:

a second isolating diaphragm that covers over the second surface section and is connected in a pressure-tight manner with the sensor body by forming a second isolating diaphragm chamber along at least one circumferential edge;
wherein the second isolating diaphragm chamber, the second channel and the second sub-chamber are filled with the transmission liquid to transfer the pressure present at the second isolating diaphragm to the second side of the measuring diaphragm via the second channel and the second sub-chamber; wherein the differential pressure sensor is specified for a temperature range between a minimum temperature and a maximum temperature, and wherein the pressure sensor is specified for a differential pressure range, wherein at the minimum operating temperature the transmission liquid in the sub-chambers still has such a volume that the first pressure and the second pressure can be introduced into the first and second sub-chamber over the entire specified differential pressure range without one of the isolating diaphragms coming into a contact position, and that at the maximum temperature in the event of one-sided overload the isolating diaphragm is pressed against the surface section of the sensor body by the side with the higher pressure such that the total oil volume passes from the isolating diaphragm chamber to the corresponding sub-chamber and is absorbed by deflection of the measuring diaphragm wherein the measuring diaphragm does not experience any plastic deformation.

**Revendications**

1. Capteur de pression (1), comprenant
   un corps de capteur avec
   une chambre de capteur à l'intérieur,
   au moins une première membrane de séparation (16a, 16b), laquelle est reliée avec le corps de capteur en formant une première chambre de membrane de séparation (15a, 15b) ;
   une membrane de mesure (2), laquelle scinde la chambre de capteur en deux sous-chambres (3a, 3b), la membrane de mesure comprenant un disque pour l'essentiel plan en position de repos ;
   un liquide de transmission, avec lequel la premier chambre de membrane de séparation (15a, 15b), la première sous-chambre (3a, 3b) et un canal (14a, 14b) intermédiaire sont remplis, afin de transmettre une pression à la membrane de mesure (2) ;
   le capteur de pression (1) étant spécifié pour une plage de température comprise entre une température minimale et une température maximale, ainsi que pour une plage de pression,
   pour lequel, à la température minimale, le volume du liquide de transmission dans la première sous-chambre, le premier canal et la première chambre de membrane de séparation est suffisant pour transmettre sur la totalité de la plage de pression la pression à la membrane de mesure, sans que la première membrane ne vienne en appui,
   **caractérisé en ce**
   **qu'**en cas de surcharge à la température maximale, le volume d'huile total parvient de la chambre de membrane de séparation dans la première sous-chambre et est absorbé par la déviation de la membrane de mesure, cette dernière ne subissant aucune déformation plastique.

2. Capteur de pression selon la revendication 1, pour lequel la formule suivante s'applique :

$$V_{max} \leq \frac{R^4}{h} \cdot \frac{\pi}{12} \cdot (1 - \upsilon^2) \cdot \frac{1}{S} \frac{\sigma_{max}}{E} \qquad (1)$$

   où $V_{max} = V(T_{max})$, où $T_{max}$ est la température maximale spécifiée avec le facteur de sécurité $S \geq 1$, où $V_{max}$ est le volume maximal du liquide de transmission dans la chambre de membrane de séparation en position de repos du capteur de pression, R et h étant le rayon et l'épaisseur de la membrane de mesure, v le coefficient de Poisson du matériau de la membrane de mesure, $\sigma_{max}$ la tension maximale admissible du matériau de la membrane de mesure et E le module d'élasticité du matériau de la membrane de mesure.

3. Capteur selon la revendication 1 ou 2, pour lequel la formule suivante s'applique :

$$V_{min} \geq \frac{R^6}{h^3} \cdot \frac{\pi \cdot (1 - \upsilon^2)}{16 \cdot E} \cdot p_{max} \qquad (2),$$

   où $V_{min}$ est le volume minimal du liquide de transmission dans la chambre de membrane de séparation en position de repos du capteur de pression, et $p_{max}$ est la limite supérieure de la plage de mesure spécifiée,
   où $V_{min} = V(T_{min})$, $T_{min}$ étant la température minimale spécifiée.

4. Capteur de pression selon l'une des revendications précédentes, pour lequel la différence entre la température maximale spécifiée et la température minimale spécifiée n'est pas inférieure à 125 K, de préférence pas inférieure à 165 K, encore de préférence pas inférieure à 200 K et particulièrement de préférence pas inférieure à 220 K.

**5.** Capteur de pression selon l'une des revendications précédentes, pour lequel la membrane de mesure est constituée d'un premier matériau et le corps de capteur d'un deuxième matériau, le coefficient de dilatation thermique $\alpha_1$ du premier matériau ne différant pas plus de 10 %, de préférence pas plus de 5 %, particulièrement de préférence pas plus de 2,5 % du coefficient de dilatation thermique $\alpha_2$ du deuxième matériau.

**6.** Capteur de pression selon l'une des revendications précédentes, pour lequel la membrane de mesure et le corps de capteur comportent de l'acier, notamment de l'acier inoxydable ou de l'acier à ressorts, la membrane de mesure se trouvant notamment au potentiel du corps de capteur.

**7.** Capteur de pression selon l'une des revendications précédentes, pour lequel la membrane de mesure comprend au moins une électrode d'un convertisseur capacitif, le convertisseur comportant en outre une contre-électrode, laquelle est positionnée en face de la membrane de mesure, pour l'essentiel de façon indépendante de la pression par rapport au corps de capteur.

**8.** Capteur de pression selon la revendication 6 ou 7, pour lequel la contre-électrode est disposée à une distance des surfaces conductrices telle que les capacités entre l'électrode de la membrane de mesure et de l'au moins une contre-électrode ne sont pas inférieures à la capacité de dispersion entre les électrodes du convertisseur capacitif et du corps de capteur.

**9.** Capteur de pression selon l'une des revendications précédentes, pour lequel la sous-chambre contient un corps de remplissage, lequel est disposé entre une paroi de la sous-chambre et le côté de la contre-électrode situé à l'opposé de la membrane de mesure.

**10.** Capteur de pression selon la revendication 9, pour lequel au moins 25 %, de préférence au moins 50 % d'une dilatation thermique du liquide de transmission est absorbée par l'augmentation d'un volume libre $V_2 - V_1$ d'une sous-chambre, $V_2$ étant le volume de la sous-chambre et $V_1$ le volume du corps de remplissage.

**11.** Capteur de pression selon la revendication 9 ou 10, pour lequel le corps de remplissage est un isolateur et comprend un porte-électrode pour l'au moins une contre-électrode.

**12.** Capteur de pression selon l'une des revendications précédentes, pour lequel à la limite supérieure de la plage de mesure spécifiée $p_{max}$, la tension maximale dans la membrane de mesure n'est pas inférieure à 20 % de la tension maximale admissible $\sigma_{max}$, notamment pas inférieure à 30 % de $\sigma_{max}$, de préférence pas inférieure à 35 % de $\alpha_{max}$.

**13.** Capteur de pression selon l'une des revendications précédentes, pour lequel à la limite supérieure de la plage de mesure spécifiée $p_{max}$, la tension maximale dans la membrane de mesure n'est pas supérieure à 60 % de la tension maximale admissible $\sigma_{max}$, notamment pas supérieure à 50 % de $\sigma_{max}$.

**14.** Capteur de pression selon l'une des revendications précédentes, pour lequel à la limite supérieure de la plage de mesure spécifiée $p_{max}$, la déviation de la membrane de mesure en son centre n'est pas inférieure à 20 %, notamment pas inférieure à 25 %, et de préférence pas inférieure à 30 % de la distance d'équilibre de la membrane de mesure par rapport à une contre-électrode d'un convertisseur capacitif, lequel est formé de la membrane de mesure et de la contre-électrode.

**15.** Capteur de pression selon l'une des revendications précédentes, pour lequel le capteur est un capteur de pression différentielle, le corps de capteur comprenant en outre une deuxième partie de surface, qui communique par l'intermédiaire d'un deuxième canal avec la deuxième sous-chambre à l'intérieur du corps de capteur ; pour lequel le capteur de pression différentielle comprend en outre :

une deuxième membrane de séparation, qui recouvre la deuxième partie de surface et est reliée de façon étanche à la pression avec le corps de capteur en formant une deuxième chambre de membrane de séparation le long d'au moins un bord périphérique ;
pour lequel la deuxième chambre de membrane de séparation, le deuxième canal et la deuxième sous-chambre sont remplis avec le liquide de transmission, afin de transmettre la pression appliquée à la deuxième membrane de séparation, par l'intermédiaire du deuxième canal et de la deuxième sous-chambre, vers le deuxième côté de la membrane de séparation ; pour lequel le capteur de pression différentielle est spécifié pour une plage de température comprise entre une température minimale et une température maximale, et pour lequel le capteur de pression est spécifié pour une plage de pression différentielle, le liquide de transmission présent dans les sous-chambres présentant, à la température de fonctionnement minimale, encore un volume tel que la première pression et la deuxième pression sont acheminées dans la première et dans la deuxième sous-chambre sur toute la plage de pression différentielle spécifiée, sans que l'une des membranes de séparation ne vienne en appui, et que, à la température maximale dans le cas d'une surcharge unilatérale, la membrane de séparation est pressée par le côté avec une pression supérieure contre la partie de surface du corps de capteur, si bien que le volume d'huile total parvient de la chambre de membrane de séparation dans la sous-chambre correspondante et est absorbé par la déviation de la membrane de mesure, cette dernière ne subissant aucune déformation plastique.

Fig. 1

**Fig. 2**

EP 2 516 979 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4086815 A
- US 4949581 A